# EUROPÄISCHE PATENTSCHRIFT

(11) **EP 0 997 478 B1**
(45) Veröffentlichungstag und Bekanntmachung des Hinweises auf die Patenterteilung: **23.04.2003**
(21) Anmeldenummer: 99121342.2
(22) Anmeldetag: 26.10.1999
(51) Int. Cl.: C08B 11/193, C08B 11/10

(54) **Wasserlösliche sulfoalkylgruppenhaltige hydrophob modifizierte Celluloseether, Verfahren zu deren Herstellung sowie deren Verwendung in Dispersionsfarben**
Water soluble hydrophobically modified sulphoalkyl cellulose ethers, process for making the same and their use in latex paints
Derivés sulfoalkylés d'éthers de cellulose modifiés pour les rendre hydrophobes, solubles dans l'eau, procedé pour leur fabrication, et leur utilisation dans les peintures en dispersion

(30) Priorität: 27.10.1998 DE 19849442
(43) Veröffentlichungstag der Anmeldung: 03.05.2000
(73) Patentinhaber: Clariant GmbH, 65929 Frankfurt am Main (DE)
(72) Erfinder: Dönges, Reinhard, Dr., 65812 Bad Soden (DE); Kirchner, Jürgen, 65201 Wiesbaden (DE)

(56) Entgegenhaltungen:
- EP-A- 0 511 540
- EP-A- 0 554 751
- EP-A- 0 573 852
- EP-A- 0 781 780
- US-A- 5 708 162

## Beschreibung

Die vorliegende Erfindung betrifft wasserlösliche, sulfoalkylgruppenhaltige hydrophob modifizierte Celluloseether, Verfahren zu ihrer Herstellung und ihre Verwendung sowie Dispersionsfarben, welche diese Verbindungen enthalten.

Handelsübliche Dispersionsfarben besitzen eine ausgeprägte Strukturviskosität. Diese steht im Gegensatz zu Forderungen der Verarbeiter nach Farben mit mehr Newton'scher Rheologie, welche hinsichtlich Verstreichbarkeit, Verlauf und Spritzen deutliche Vorteile bieten. Durch die Verwendung von mit langkettigen Alkylgruppen hydrophob modifizierten Celluloseethern als Verdicker oder die Verwendung von herkömmlichen Celluloseethern in Kombination mit assoziativ wirkenden synthetischen Verdickern, kann in Dispersionsfarben eine mehr Newton'sche Rheologie eingestellt werden.

Ein Nachteil der kommerziellen, mit langkettigen Alkylgruppen hydrophob modifizierten Celluloseether als Verdicker ist eine unerwünscht hohe Nachverdickung der Dispersionsfarbe bei der Lagerung. Die Konsistenz der Dispersionsfarbe steigt nach ihrer Herstellung stark an und kann nach einem Tag Lagerzeit mehr als den doppelten Wert erreichen. Hierdurch wird eine gezielte Einstellung/Überwachung der Farbenkonsistenz beim Farbenhersteller erschwert. Ein weiterer Nachteil ist die starke Abnahme der Wasserlöslichkeit der hydrophob modifizierten Celluloseether schon bei niedrigen Substitutionsgraden.

In der EP-A-0 307 915 versucht man die Löslichkeit von hydrophob modifizierten Celluloseethem durch die zusätzliche Einführung einer Carboxymethylgruppe zu verbessern. Nachteilig ist jedoch die pH-Empfindlichkeit der Carboxymethylgruppe, die schon im leicht sauren Bereich protoniert wird und dadurch selbst hydrophoben Charakter annimmt. Ferner ist die Carboxymethylgruppe gegenüber zweiwertigen Ionen empfindlich, wie z. B. Calciumionen. Calciumverbindungen werden jedoch häufig als Füllstoffe in wäßrigen Dispersionsfarben eingesetzt.

P.Talaba, 1. Srokova, P. Hodul und G. Cik beschreiben in Chem. Papers 50 (2), 101 (1996) hydrophob-modifizierte Sulfoethylcellulosen. Diese Verbindungen benötigen jedoch auf Grund des Fehlens anderer Substituenten hohe Substitutionsgrade. Sie sind nur bei niedrigen Polymerisationsgraden wasserlöslich und sie besitzen eine starke Schaumbildungstendenz, was für den Einsatz in Dispersionsfarben unerwünscht ist.

In der EP-A-0 781 780 werden sulfoalkylierte mit C₁₀-C₄₀-Alkylketten hydrophob modifizierte Celluloseether beschrieben, die ebenfalls hohe Tensidwirkung besitzen und als Verdicker in Kosmetikformulierungen eingesetzt werden. Für diese Verbindungen wird ein Sulfoalkylierungsgrad von 0,1 bis 1 beansprucht.

Aufgabe der vorliegenden Erfindung ist die Schaffung von wasserlöslichen, hydrophob modifizierten Cellulosederivaten, die beim Einsatz in Dispersionsfarben nur eine geringe, mit nicht-hydrophob modifizierten Celluloseethern vergleichbare Nachverdickung der Farben bewirken und gleichzeitig deren Spritzverhalten bei Auftrag der Farben mit der Rolle in einem Ausmaß verbessern wie es erst bei den kommerziellen mit langkettigen Alkylgruppen hydrophob modifizierten Celluloseethern erreicht wird. Die Erfindung soll außerdem Cellulosederivate bereitstellen, die beim Einsatz in Dispersionsfarben deren Spritzverhalten schon bei relativ niedrigen Farbenviskositäten wesentlich verbessern, wobei sich die Farbe andererseits gut verstreichen lassen muß. Zusätzlich ist eine gute Scheuerbeständigkeit der Dispersionsfarbe zu erreichen.

Gegenstand der Erfindung sind daher wasserlösliche, ionische Celluloseether aus der Gruppe der Hydroxyalkylcellulosen, die mit durchschnittlich 0,001 bis 1,0, vorzugsweise 0,001 bis 0,2 Alkylgruppen pro Anhydroglucoseeinheit und einer Anzahl an Hydroxyalkylgruppen pro Anhydroglucoseeinheit (MS) von mindestens 2, 31 substituiert sind und 0,01 bis 0,1 Sulfoalkylgruppen pro Anhydroglucoseeinheit tragen.

Bevorzugt sind Celluloseether der allgemeinen Formel

[C₆H₇O₂(OR¹)(OR²)(OR³)]ₘ

wobei
- C₆H₇O₂: eine Anhydroglucoseeinheit,
- m: 50 - 3000, insbesondere 100 - 1000,
- und R¹, R², R³: unabhängig voneinander eine Polyalkylenoxidkette der allgemeinen Formel 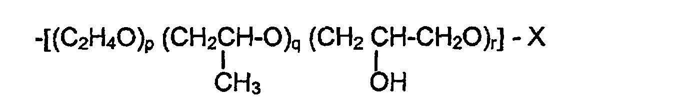
mit X = H, CₙH₂ₙ₊₁, CH₂-CH₂-SO₃Y, CH₂-CHOH-CH₂SO₃Y,
wobei n = 4- 20
und Y = H, Na, K
darstellt, worin
p, q, und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5, vorzugsweise 1,5 bis 3,0, ist und wobei die Reihenfolge der Oxyalkyleinheiten in der Polyalkylenoxidkette beliebig ist und die durchschnittliche Anzahl der hydrophob modifizierten Gruppen pro Anhydroglucoseeinheit (DS HM) 0,001 bis 0,2, vorzugsweise 0,01 bis 0,04, beträgt und die durchschnittliche Anzahl der Sulfoalkylgruppen pro Anhydroglucoseeinheit 0,01 bis 0,1, vorzugsweise 0,01 bis 0,09 beträgt. Vorzugsweise sind die Sulfoalkylgruppen Sulfoethylgruppen.

Gegenstand der vorliegenden Erfindung sind auch Verfahren zur Herstellung der erfindungsgemäßen Celluloseether durch Veretherung von Cellulose mit einem Veretherungsmittel aus der Gruppe der Alkylenoxide und Veretherung mit einem Alkylhalogenid oder einem Alkylglycidylether und einem Sulfonat unter Basenkatalyse oder durch Veretherung von Celluloseethern aus der Gruppe der Hydroxyalkylcellulosen mit einem Alkylhalogenid oder einem Alkylglycidylether und einem Sulfonat unter Basenkatalyse, vorzugsweise
A) durch Veretherung von Cellulose mit Ethylenoxid, Propylenoxid und/oder Glycidylalkohol und mit einem Alkylhalogenid oder einem Alkylenoxid oder einem Alkylglycidylether und einem Alkenylsulfonat oder Chloralkylsulfonat unter Basenkatalyse, vorzugsweise in einem Suspensionsmittel;
B) durch Veretherung von Hydroxyethylcellulose, Hydroxypropylcellulose, Dihydroxypropylcellulose oder einem Celluloseether mit mehreren der genannten Hydroxyalkylsubstituenten mit einem Alkylhalogenid oder einem Alkylenoxid oder einem Alkylglycidylether und einem Alkenylsulfonat oder Chloralkylsulfonat unter Basenkatalyse, vorzugsweise in einem Suspensionsmittel.

Als Suspensionsmittel werden vorzugsweise niedere Alkohole oder Ketone, beispielsweise Isopropanol, tert. Butanol oder Aceton im Gewichtsverhältnis zur Cellulose von 3:1 bis 30:1 vorzugsweise 8:1 bis 15:1 eingesetzt. Als Base finden üblicherweise wäßrige Lösungen von Alkalimetallhydroxiden, insbesondere Natriumhydroxid, Verwendung. Das Molverhältnis Base/Anhydroglucoseeinheit wird durch das eingesetzte Kohlenhydrat(derivat) vorgegeben. Für den Einsatz von Cellulose (Methode A) beträgt das Molverhältnis vorzugsweise zwischen 1,0 und 1,5, für bereits veretherte Produkte (Methode B) vorzugsweise zwischen 0,1 und 1,0 Mol Base pro Anhydroglucoseeinheit.

Der Wassergehalt der Reaktionsmischung liegt vorzugsweise zwischen 5 und 30, insbesondere zwischen 10 und 20 Mol Wasser pro Anhydroglucoseeinheit.

Nach Vorlegen des Suspensionsmittels, Zugabe der Cellulose und Alkalisierung mit der wäßrigen Base wird der Ansatz gut homogenisiert und ohne Wärmezufuhr, gegebenenfalls unter Kühlung, vorzugsweise 0,5 bis 2 Stunden gerührt. Danach werden die Veretherungsreagenzien (Epoxyalkane, Alkylglycidylether und/oder Alkylhalogenide und Sulfonsäurederivate) gemeinsam oder nacheinander zugegeben. Der Ansatz wird dann vorzugsweise auf eine Temperatur im Bereich von 60 bis 120 °C, besonders bevorzugt von 80 bis 100 °C gebracht und vorzugsweise 2 bis 6 Stunden lang erhitzt. Nach Abkühlen wird mit einer Säure, vorzugsweise Salzsäure, Salpetersäure und/oder Essigsäure vorzugsweise auf pH 6 bis 8 neutralisiert. Das Suspensionsmittel wird durch Dekantieren oder Filtrieren entfernt. Der rohe Cellulosemischether kann durch Extraktion mit wäßrigen Alkoholen oder Ketonen mit einem bevorzugten Wasseranteil von 10 bis 50 Gew.-%, insbesondere Isopropanol, Ethanol und Aceton, von den anhaftenden Nebenprodukten, beispielsweise Polyglykolen, Glykolethern und Salzen befreit werden. Durch Trocknen im Vakuum oder bei Normaldruck bei 50 bis 120 °C erhält man den gewünschten Cellulosemischether als farbloses bis leicht gelbliches Pulver.

Bei Bedarf kann der erfindungsgemäß gewünschte Polymerisationsgrad des Celluloseethers vor oder im Laufe seines Herstellungsprozesses durch Zugabe einer Peroxoverbindung, wie zum Beispiel Wasserstoffperoxid oder eines Peroxodisulfatsalzes oder eines anderen Oxidationsmittels, beispielsweise Natriumchlorit, eingestellt werden. Die genannten Methoden zum Molekulargewichtsabbau und die jeweilige technische Durchführung sind Stand der Technik (T. M. Greenway in "Cellulosic Polymers, Blends and Composites", Herausg. R. D. Gilbert, Carl Hanser Verlag München, 1994, S. 178 ff.).

Geeignete Reaktionsapparate zur Herstellung der erfindungsgemäßen Celluloseetherderivate sind beispielsweise Rührkessel, Mischer und Kneter. Grundsätzlich können alle Reaktionsapparate verwendet werden, die auch bei der Herstellung von Cellulosederivaten mit nicht-hydrophoben Substituenten üblich sind und eine ausreichende Durchmischung der Cellulose oder des wasserlöslichen Celluloseethers mit den nicht-hydrophoben Reagenzien gestattet.

Ein weiterer Gegenstand der vorliegenden Erfindung ist die Verwendung in Dipersionsfarben von wasserlöslichen, ionischen Celluloseethem aus der Gruppe der Hydroxyalkylcellulosen, die mit durchschnittlich 0,001 bis 1,0 Alkylgruppen pro Anhydroglucoseeinheit und einer Anzahl an Hydroxyalkylgruppen pro Anhydroglucoseeinheit (MS) von mindestens 2, 31 substituiert sind und 0,01 bis 0,4 Sulfoalkylgruppen pro Anhydroglucoseeinheit tragen, sowie eine Dispersionsfarbe enthaltend wasserlösliche, ionische Celluloseether aus der Gruppe der Hydroxyalkylcellulosen, die mit durchschnittlich 0,001 bis 1,0 Alkylgruppen pro Anhydroglucoseeinheit und einer Anzahl an Hydroxyalkylgruppen pro Anhydroglucoseeinheit (MS) von mindestens 2, 31 substituiert sind und 0,01 bis 0,4 Sulfoalkylgruppen pro Anhydroglucoseeinheit tragen.

Die vorliegende Erfindung wird im folgenden anhand von Ausführungsbeispielen ausführlich beschrieben, ohne dadurch jedoch eingeschränkt zu werden.

### Herstellungsbeispiele:

### Beispiel 1

Als hydrophobierendes Reagenz wird ein Alkyl(C₁₅-C₁₇)-glycidylether der Fa. EMS-Chemie, Zürich (Handelsname Grilonit® RV 1814) eingesetzt.
In einem 2 l Glasreaktor mit Ankerrührer wird fein gemahlener Nadelholzzellstoff in nahezu wasserfreiem Isopropanol suspendiert. Nach dem Inertisieren (evakuieren und fluten mit Stickstoff) läßt man unter Rühren bei 25°C 49,5 %ige Natronlauge und Wasser zulaufen. Es wird 60 Minuten bei 25°C alkalisiert. Man läßt Ethylenoxid zulaufen, hält die Temperatur 1 Stunde lang bei 40°C und anschließend 1 Stunde bei 80°C. Dann gibt man bei ca. 80°C die gewünschte Menge eines Alkylglycidylethers gelöst in 20 g Isopropanol zu und verethert 2 Stunden bei 80°C. Es wird wäßrige 28,3 %ige Natriumvinylsulfonat(NaVSO₃)-Lösung zugegeben und 2 bis 3 Stunden bei 80°C zur Reaktion gebracht Nach dem Abkühlen auf Raumtemperatur wird mit ca. 20 %iger Salzsäure neutralisiert Das Produkt wird abgesaugt, mit 80 %igem wäßrigem Aceton bis zu einem Salzgehalt < 0,5 % gewaschen und bei 75°C getrocknet
Die Einsatzmengen sowie die Substitutionsgrade der so erhaltenen hydrophob modifizierten Hydroxyethylsulfoethylcellulosen sind in Tabelle 1 aufgeführt

**Tabelle 1**

| | Einsatzmengen (g) | | | | | | | | Produkt-ausbeute g | Substitutionsgrade | | |
|---|---|---|---|---|---|---|---|---|---|---|---|---|
| Beispiel 1 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 90,0 | - | 20 | 41,0 | 121,1 | 2,46 | - | 0,07 |
| B | 75,0 | 593 | 103,6 | 40,0 | 90,0 | 6,4 | 20 | 41,0 | 123,1 | 2,49 | 0,006 | 0,07 |
| C | 75,0 | 593 | 103,6 | 40,0 | 90,0 | 12,8 | 20 | 41,0 | 121,2 | 2,42 | 0,007 | 0,07 |
| D | 75,0 | 593 | 103,6 | 40,0 | 90,0 | 19,2 | 20 | 41,0 | 121,8 | 2,53 | 0,011 | 0,08 |
| E | 75,0 | 593 | 103,6 | 40,0 | 90,0 | 25,6 | 20 | 41,0 | 119,9 | 2,49 | 0,012 | 0,08 |
| F | 85,0 | 672 | 117,4 | 45,3 | 102,0 | - | 22,7 | 46,5 | 140,1 | 2,38 | - | 0,07 |
| G | 85,0 | 672 | 117,4 | 45,3 | 102,0 | 7,3 | 22,7 | 46,5 | 136,5 | 2,33 | 0,003 | 0,07 |
| H | 85,0 | 672 | 117,4 | 45,3 | 102,0 | 14,5 | 22,7 | 46,5 | 138,8 | 2,32 | 0,005 | 0,07 |
| I | 85,0 | 672 | 117,4 | 45,3 | 102,0 | 21,8 | 22,7 | 46,5 | 137,3 | 2,39 | 0,007 | 0,07 |
| J | 85,0 | 672 | 117,4 | 45,3 | 102,0 | 29,0 | 22,7 | 46,5 | 139,4 | 2,31 | 0,010 | 0,08 |
| K | 75,0 | 593 | 103,6 | 40,0 | 90,0 | - | 20 | 62,0 | 124,3 | 2,35 | - | 0,10 |
| L | 75,0 | 593 | 103,6 | 40,0 | 90,0 | 6,4 | 20 | 62,0 | 124,5 | 2,42 | 0,006 | 0,10 |
| M | 75,0 | 593 | 103,6 | 40,0 | 90,0 | 12,8 | 20 | 62,0 | 122,3 | 2,34 | 0,007 | 0,08 |
| N | 75,0 | 593 | 103,6 | 40,0 | 90,0 | 19,2 | 20 | 62,0 | 119,5 | 2,36 | 0,010 | 0,09 |
| O | 75,0 | 593 | 103,6 | 40,0 | 90,0 | 25,6 | 20 | 62,0 | 119,6 | 2,47 | 0,012 | 0,09 |

| | | | | | | | | | | | | |
|---|---|---|---|---|---|---|---|---|---|---|---|---|
| *) LM = Lösemittel für Reagenz | | | | | | | | | | | | |

### Beispiel 2

Es wird wie in Beispiel 1 verfahren, nur daß eine höhere molare Menge an Ethylenoxid eingesetzt wird.
Die Einsatzmengen sowie die Substitutionsgrade der so erhaltenen hydrophob modifizierten Hydroxyethylsulfoethylcellulosen sind in Tabelle 2 aufgeführt.

**Tabelle 2**

| | Einsatzmengen (g) | | | | | | | | Produkt-ausbeute g | Substitutionsgrade | | |
|---|---|---|---|---|---|---|---|---|---|---|---|---|
| Beispiel 2 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 138,4 | - | 20 | 62,0 | 142,2 | 3,59 | - | 0,04 |
| B | 75,0 | 593 | 103,6 | 40,0 | 138,4 | 6,4 | 20 | 62,0 | 142,5 | 3,61 | 0,010 | 0,04 |
| C | 75,0 | 593 | 103,6 | 40,0 | 138,4 | 12,8 | 20 | 62,0 | 140,8 | 3,62 | 0,016 | 0,06 |
| D | 75,0 | 593 | 103,6 | 40,0 | 138,4 | 19,2 | 20 | 62,0 | 143,1 | 3,67 | 0,021 | 0,04 |
| E | 75,0 | 593 | 103,6 | 40,0 | 138,4 | 25,6 | 20 | 62,0 | 149,2 | 3,59 | 0,027 | 0,03 |
| F | 75,0 | 593 | 103,6 | 40,0 | 138,4 | 38,4 | 20 | 62,0 | 145,7 | 3,80 | 0,044 | 0,03 |
| G | 75,0 | 593 | 103,6 | 40,0 | 138,4 | 64,0 | 20 | 62,0 | 143,6 | 3,75 | 0,055 | 0,04 |

| | | | | | | | | | | | | |
|---|---|---|---|---|---|---|---|---|---|---|---|---|
| *) LM = Lösemittel für Reagenz | | | | | | | | | | | | |

### Beispiel 3

Es wird wie in Beispiel 2 verfahren, nur daß hochmolekularer Linterszellstoff eingesetzt wird.
Die Einsatzmengen sowie die Substitutionsgrade der so erhaltenen hydrophob modifizierten Hydroxyethylsulfoethylcellulosen sind in Tabelle 3 aufgeführt.

**Tabelle 3**

| | Einsatzmengen (g) | | | | | | | | Produkt-ausbeute g | Substitutionsgrade | | |
|---|---|---|---|---|---|---|---|---|---|---|---|---|
| Beispiel 3 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 138,4 | - | 20 | 62,0 | 151,9 | 3,00 | - | 0,04 |
| B | 75,0 | 593 | 103,6 | 40,0 | 138,4 | - | 20 | 62,0 | 149,0 | 3,54 | - | 0,09 |
| C | 75,0 | 593 | 103,6 | 40,0 | 138,4 | 6,4 | 20 | 62,0 | 148,6 | 3,64 | 0,009 | 0,09 |
| D | 75,0 | 593 | 103,6 | 40,0 | 138,4 | 12,8 | 20 | 62,0 | 149,3 | 3,56 | 0,013 | 0,09 |
| E | 75,0 | 593 | 103,6 | 40,0 | 138,4 | 19,2 | 20 | 62,0 | 146,0 | 3,54 | 0,020 | 0,08 |
| F | 75,0 | 593 | 103,6 | 40,0 | 138,4 | 25,6 | 20 | 62,0 | 147,6 | 3,41 | 0,022 | 0,07 |
| G | 75,0 | 593 | 103,6 | 40,0 | 138,4 | 38,4 | 20 | 62,0 | 147,6 | 3,31 | 0,036 | 0,07 |
| H | 75,0 | 593 | 103,6 | 40,0 | 138,4 | 64,0 | 20 | 62,0 | 150,6 | 3,35 | 0,051 | 0,07 |
| I | 85,0 | 672 | 117,4 | 45,3 | 156,9 | - | 22,7 | 22,7 | 160,0 | 3,18 | - | 0,03 |
| J | 85,0 | 672 | 117,4 | 45,3 | 156,9 | 7,3 | 22,7 | 22,7 | 163,5 | 3,04 | 0,011 | 0,02 |
| K | 85,0 | 672 | 117,4 | 45,3 | 156,9 | 14,5 | 22,7 | 22,7 | 164,1 | 3,32 | 0,016 | 0,01 |
| L | 85,0 | 672 | 117,4 | 45,3 | 156,9 | 21,8 | 22,7 | 22,7 | 157,4 | 3,31 | 0,020 | 0,01 |
| M | 85,0 | 672 | 117,4 | 45,3 | 156,9 | 29,0 | 22,7 | 22,7 | 160,7 | 3,41 | 0,027 | 0,02 |
| N | 85,0 | 672 | 117,4 | 45,3 | 156,9 | 43,5 | 22,7 | 22,7 | 166,0 | 3,36 | 0,037 | 0,02 |
| O | 85,0 | 672 | 117,4 | 45,3 | 156,9 | 72,5 | 22,7 | 22,7 | 166,7 | 3,44 | 0,063 | 0,01 |

| | | | | | | | | | | | | |
|---|---|---|---|---|---|---|---|---|---|---|---|---|
| *) LM = Lösemittel für Reagenz | | | | | | | | | | | | |

### Beispiel 4

Es wird wie in Beispiel 2 verfahren. Zur oxidativen Molekulargewichtseinstellung wird nach der Veretherung mit dem Alkylglycidylether eine kleine Menge 3 %iger Wasserstoffperoxidlösung zugegeben und 15 min bei 80 °C gehalten. Danach erfolgt die Zugabe von Natriumvinylsulfonat.
Die Einsatzmengen sowie die Substitutionsgrade der so erhaltenen hydrophob modifizierten Hydroxyethylsulfoethylcellulosen sind in Tabelle 4 aufgeführt.

**Tabelle 4**

| | Einsatzmengen (g) | | | | | | | | | Produkt-ausbeute g | Substitutionsgrade | | |
|---|---|---|---|---|---|---|---|---|---|---|---|---|---|
| Beispiel 4 | Zellstoff | i-Propanol | H₂O | NaOH 49,5 % | EO | RV1814 | LM *) | H₂O₂ 3 % | NaVSO₃ 28,3 % | | MS HE | DS HM | DS SE |
| A | 85,0 | 672 | 112,0 | 45,3 | 156,9 | 21,8 | 22,7 | 5,5 | 70,3 | 156,6 | 3,21 | 0,027 | 0,05 |
| B | 85,0 | 672 | 114,6 | 45,3 | 156,9 | 21,8 | 22,7 | 2,8 | 70,3 | 160,2 | 3,62 | 0,023 | 0,07 |
| C | 85,0 | 672 | 116,0 | 45,3 | 156,9 | 21,8 | 22,7 | 1,4 | 70,3 | 160,0 | 3,65 | 0,021 | 0,08 |
| D | 85,0 | 672 | 112,0 | 45,3 | 156,9 | 29,0 | 22,7 | 5,5 | 70,3 | 156,7 | 3,54 | 0,024 | 0,06 |
| E | 85,0 | 672 | 114,6 | 45,3 | 156,9 | 29,0 | 22,7 | 2,8 | 70,3 | 161,0 | 3,54 | 0,028 | 0,08 |
| F | 85,0 | 672 | 116,0 | 45,3 | 156,9 | 29,0 | 22,7 | 1,4 | 70,3 | 162,0 | 3,59 | 0,025 | 0,08 |

| | | | | | | | | | | | | | |
|---|---|---|---|---|---|---|---|---|---|---|---|---|---|
| *) LM = Lösemittel für Reagenz | | | | | | | | | | | | | |

### Vergleichsbeispiel 5

Es wird wie in Beispiel 1 verfahren. Als hydrophobierendes Reagenz wird der Glycidylether eines Phenyloxethylates (5 Ethylenoxideinheiten) der Fa. Nagase Chemicals Ltd., Osaka (Handelsname Denacol® EX-145) eingesetzt.
Die Einsatzmengen sowie die Substitutionsgrade der so erhaltenen hydrophob modifizierten Hydroxyethylsulfoethylcellulosen sind in Tabelle 5 aufgeführt.

**Tabelle 5**

| | Einsatzmengen (g) | | | | | | | | Produkt-Ausbeute g | Substitutionsgrade | | |
|---|---|---|---|---|---|---|---|---|---|---|---|---|
| Beispiel 5 | Zellstoff | i-Propanol | H₂O | NaOH 49,5 % | EO | Denacol EX-145 | LM *) | NaVSO₃ 28,3 % | | MS HE | DS HM | DS SE |
| A | 85,0 | 672 | 117,4 | 45,3 | 118,7 | - | 22,7 | 70,3 | 146,5 | 2,78 | - | 0,09 |
| B | 85,0 | 672 | 117,4 | 45,3 | 118,7 | 9,4 | 22,7 | 70,3 | 148,6 | 2,86 | 0,008 | 0,10 |
| C | 85,0 | 672 | 117,4 | 45,3 | 118,7 | 18,9 | 22,7 | 70,3 | 151,7 | 2,95 | 0,016 | 0,10 |
| D | 85,0 | 672 | 117,4 | 45,3 | 118,7 | 28,3 | 22,7 | 70,3 | 147,5 | 2,97 | 0,027 | 0,09 |
| E | 85,0 | 672 | 117,4 | 45,3 | 118,7 | 37,8 | 22,7 | 70,3 | 147,2 | 3,02 | 0,033 | 0,09 |

| | | | | | | | | | | | | |
|---|---|---|---|---|---|---|---|---|---|---|---|---|
| *) LM = Lösemittel für Reagenz | | | | | | | | | | | | |

### Beispiel 6

Es wird wie in Beispiel 1 verfahren. Als hydrophobierendes Reagenz wird der Glycidylether eines Lauryloxethylates (C₁₂-Alkyl mit 15 Ethylenoxideinheiten) der Fa. Nagase Chemicals Ltd., Osaka (Handelsname Denacol® EX-171) eingesetzt. Die Einsatzmengen sowie die Substitutionsgrade der so erhaltenen hydrophob modifizierten Hydroxyethylsulfoethylcellulosen sind in Tabelle 6 aufgeführt.

**Tabelle 6**

| | Einsatzmengen (g) | | | | | | | | Produkt-ausbeute g | Substitutionsgrade | | |
|---|---|---|---|---|---|---|---|---|---|---|---|---|
| Beispiel 6 | Zellstoff | i-Propanol | H₂O | NaOH 49,5 % | EO | Denacol EX-171 | LM *) | NaVSO₃ 28,3 % | | MS HE | DS HM | DS SE |
| A | 85,0 | 672 | 117,4 | 45,3 | 118,7 | - | 22,7 | 70,3 | 146,5 | 2,78 | - | 0,09 |
| B | 85,0 | 672 | 117,4 | 45,3 | 118,7 | 23,0 | 22,7 | 70,3 | 146,5 | 2,82 | 0,006 | 0,09 |
| C | 85,0 | 672 | 117,4 | 45,3 | 118,7 | 23,0 | 22,7 | 70,3 | 147,2 | 2,69 | 0,006 | 0,10 |
| D | 85,0 | 672 | 117,4 | 45,3 | 118,7 | 46,1 | 22,7 | 70,3 | 148,1 | 2,83 | 0,010 | 0,11 |
| E | 85,0 | 672 | 117,4 | 45,3 | 118,7 | 46,1 | 22,7 | 70,3 | 150,3 | 2,89 | 0,009 | 0,10 |
| F | 85,0 | 672 | 117,4 | 45,3 | 118,7 | 69,1 | 22,7 | 70,3 | 151,9 | 2,92 | 0,012 | 0,10 |
| G | 85,0 | 672 | 117,4 | 45,3 | 118,7 | 92,1 | 22,7 | 70,3 | 150,7 | 3,09 | 0,017 | 0,11 |

| | | | | | | | | | | | | |
|---|---|---|---|---|---|---|---|---|---|---|---|---|
| *) LM = Lösemittel für Reagenz | | | | | | | | | | | | |

### Beispiel 7

Es wird wie in Beispiel 1 verfahren. Als Suspensions- und Lösemittel wird ein Gemisch aus tert. Butanol und Isopropanol eingesetzt.
Die Einsatzmengen sowie die Substitutionsgrade der so erhaltenen hydrophob modifizierten Hydroxyethylsulfoethylcellulosen sind in Tabelle 7 aufgeführt.

**Tabelle 7**

| | Einsatzmengen (g) | | | | | | | | Produkt-ausbeute g | Substitutionsgrade | | |
|---|---|---|---|---|---|---|---|---|---|---|---|---|
| Beispiel 7 | Zell Stoff | t-BuOH + IPA | H₂O | NaOH 49,5 % | EO | Grilonit RV1814 | LM *) | NaVSO₃ 28,3 % | | MS HE | DS HM | DS SE |
| A | 85,0 | 672 | 117,4 | 45,3 | 119,0 | 21,8 | 22,7 | 70,3 | 146,2 | 3,24 | 0,021 | 0,09 |
| B | 85,0 | 672 | 117,4 | 45,3 | 112,1 | 21,8 | 22,7 | 70,3 | 177,2 | 3,28 | 0,021 | 0,11 |
| C | 85,0 | 672 | 117,4 | 45,3 | 119,0 | 21,8 | 22,7 | 46,9 | 169,4 | 3,50 | 0,026 | 0,08 |

| | | | | | | | | | | | | |
|---|---|---|---|---|---|---|---|---|---|---|---|---|
| *) LM = Lösemittel für Reagenz | | | | | | | | | | | | |

Die in den Beispielen 1 bis 7 hergestellten Cellulosederivate werden in verschiedenen Dispersionsfarben als Verdicker eingearbeitet und ihre Wirkung mit den Verdickern des Standes der Technik verglichen.

In der Formulierung einer Seidenglanzfarbe werden Rheologie, Stabilität, das Glanzverhalten und die Applikationseigenschaften der Farbe untersucht. Die Formulierung setzt sich wie folgt zusammen:

| Gew.-Teile | Komponenten |
|---|---|
| 207 | Wasser |
| 2 | Konservierungsmittel (®Mergal K 9 N), Herst. Riedel de Haën GmbH, DE |
| 20 | Polyphosphat (10%ig ®Calgon N) Herst. BK Giulini GmbH, DE |
| 5 | Dispergiermittel (®Lopon 894) Herst. BK Giulini GmbH, DE |
| 4 | Entschäumer (®Agitan 295) Herst. Münzing Chemie GmbH, DE |
| Variabel | Verdicker |
| 225 | Titandioxid (®Hombitan R 611) Herst. Sachtleben, DE |
| 50 | Füllstoff (Kaolin, ®China Clay Speshwhite) Herst. ECC International, GB |
| 75 | Füllstoff (CaCO₃, ®Hydrocarb OG) Herst. Omya GmbH, DE |
| 2 | Natronlauge (10 %ig) |
| 460 | Acrylat-Dispersion (®Mowilith LDM 7712) Herst. Clariant GmbH, DE |
| 10 | Filmbildner, Butyldiglykolacetat |

Verdicker:
- Probe A:: 5 Gew.-Teile Verdicker Cellulosederivat des Beispiels 4A
- Probe B:: 5 Gew.-Teile Verdicker Cellulosederivat des Beispiels 4B
- Probe C:: 5 Gew.-Teile Verdicker Cellulosederivat des Beispiels 4C
- Probe D:: 5 Gew.-Teile Verdicker Cellulosederivat des Beispiels 4D

Zum Vergleich mit den Cellulosederivaten der vorliegenden Erfindung werden folgende Verdicker gemäß dem Stand der Technik eingesetzt. Alle Viskositätswerte (mPa·s) der Verdicker werden in 2 %iger wäßriger Lösung bei 20 °C gemäß DIN 53015 im Höppler-Kugelfallviskosimeter ermittelt.
- Probe E:: 5 Gew.-Teile Verdicker Methylhydroxyethylcellulose, Viskosität 6000 mPa·s, 2%ig
- Probe F:: 5 Gew.-Teile Verdicker Hydroxyethylcellulose, Viskosität 6000 mPa·s, 2%ig
- Probe G:: 5 Gew.-Teile Verdicker Hydroxyethylcellulose mit langkettigem Alkylrest, Viskosität 6000 mPa·s, 2%ig
- Probe H:: 5 Gew.-Teile Verdicker Hydroxyethylcellulose Viskosität 6000 mPa·s, 2 %ig + 5 Gew.-Teile Polyurethanverdicker ®Acrysol RM 2020

Direkt nach der Fertigstellung der Farbe sowie nach Konditionierung bei 23 °C/1 Tag werden die Farbenviskositäten mit dem Brookfield-Rheometer (Spindel 6 mit 10 min⁻¹ und 100 min⁻¹, 23 °C) gemessen. Der Quotient aus der Viskosität bei 100 min⁻¹ und 10 min⁻¹ kann als ein Maß für die Strukturviskosität herangezogen werden. Hohe Werte bedeuten geringere Strukturviskosität und stärkere Annäherung an ein ideal Newton'sches Verhalten.

Aus den gemessenen Viskositätswerten ergibt sich eine geringere Nachverdickung der erfindungsgemäßen Produkte (Probe A bis D) im Vergleich zu üblichen Celluloseethern (Probe E und F) und dem hydrophob modifizierten Celluloseether (Probe G) und der Verdickerkombination (Probe H).

Nach einer Reifezeit von einem Tag nach Herstellung der Dispersionsfarben werden die Farben mit dem Pinsel verarbeitet und die Verstreichbarkeit und das Aussehen der applizierten Farbfilme nach einer Notenskala beurteilt (siehe Erläuterungen zur Auswertung).

Zur quantitativen Beurteilung des Spritzverhaltens einer Dispersionsfarbe wird nachstehender Test durchgeführt, der die Applikation der Farbe mit der Farbrolle nachstellt:
Eine konditionierte Farbrolle wird mit einer definierten Menge (35 ml)
Dispersionsfarbe beladen und mehrmals mit motorischen Hubbewegungen auf einem praxisüblichen Farbenabstreifgitter abgerollt. Der Anpreßdruck der Farbenrolle wird konstant gehalten. Am Boden einer Schale, die als Stütze für das rechteckige Gitter dient, befindet sich ein schwarzer Karton. Die auf ihm auftreffenden Farbspritzer werden bzgl. Anzahl und Flächenabdeckung visuell verglichen und gemäß einer festgelegten Notenskala beurteilt (siehe Erläuterungen zur Auswertung).
Der Glanz des trockenen Farbfilms wird mit einem Reflektometer bei einem Winkel von 60° gemessen.

| | | Probe A | Probe B | Probe C | Probe D | Probe E | Probe F | Probe G | Probe H |
|---|---|---|---|---|---|---|---|---|---|
| Viskosität Brookfield RVT (mPa s) | | | | | | | | | |
| nach Herstellung | 10 min⁻¹ | 6910 | 9240 | 13700 | 10000 | 23800 | 14700 | 6360 | 16100 |
| | 100 min⁻¹ | 2550 | 3310 | 4000 | 3490 | 3840 | 2420 | 1580 | 3020 |
| Quotient | 100 min⁻¹/10 min⁻¹ | 0,37 | 0,36 | 0,29 | 0,34 | 0,16 | 0,16 | 0,25 | 0,19 |
| nach 1 Tag | 10 min⁻¹ | 8800 | 10300 | 15900 | 10900 | 31700 | 21300 | 11200 | 33500 |
| | 100 min⁻¹ | 3270 | 3620 | 5290 | 4150 | 5160 | 3530 | 2830 | 6020 |
| Quotient | 100 min⁻¹/10 min⁻¹ | 0,37 | 0,35 | 0,30 | 0,36 | 0,16 | 0,16 | 0,25 | 0,18 |
| Nachverdickung (%) | 10 min⁻¹ | 27,4 | 11,5 | 16,1 | 9,0 | 33,2 | 44,9 | 76,1 | 108,1 |
| | 100 min⁻¹ | 26,3 | 9,4 | 32,2 | 18,9 | 34,8 | 45,9 | 79,1 | 99,3 |
| Synärese | | 0 | 0 | 0 | 0 | 0 | 3 | 0 | 3 |
| Glanz 60° (%) | | 18,8 | 18,1 | 17,2 | 15,3 | 10,9 | 13,0 | 14,9 | 13,7 |
| Farbenspritztest | | 1+ | 1+ | 1+ | 1 | 2- | 3 | 1 | 2 |
| Verstreichbarkeit | | 1 | 1 | 1 | 1 | 1 | 1 | 1 | 1- |
| Verlauf | | 1 | 1 | 1 | 1 | 3 | 2- | 2 | 2- |

### Erläuterungen zur Auswertung:

| | |
|---|---|
| Farbenspritztest | 1 = leichtes Spritzen 2 = Spritzen 3 = starkes Spritzen 4 = leichtes Kleckern 5 = Kleckern 6 = starkes Kleckern |
| Verstreichbarkeit | 1 = sehr leicht verstreichbar 2 = leicht verstreichbar 3 = weniger leicht verstreichbar 4 = schwer verstreichbar (zäh) 5 = sehr schwer verstreichbar |
| Verlauf | 1 = glatte Oberfläche 2 = schwache Markierung der Pinselstriche 3 = deutliche Markierung der Pinselstriche 4 = starke Markierung der Pinselstriche 5 = sehr starke Markierung der Pinselstriche |

In einer lösemittelfreien Innenfarbe der folgenden Formulierung wird die Waschbeständigkeit verschiedener Verdicker untersucht.

| Gew.-Teile | Komponenten |
|---|---|
| 290 | Wasser |
| 1 | Konservierungsmittel (®Mergal K 9 N), Herst. Riedel de Haën GmbH, DE |
| 10 | Polyphosphat (10 %ig ®Calgon N) Herst. BK Giulini GmbH, DE |
| 3 | Dispergiermittel (®Mowiplus XW 330) Herst. Clariant GmbH, DE |
| 2 | Entschäumer (®Tego Foamex KS 6) Herst. Tego Chemie GmbH, DE |
| 5 | Verdicker |
| 80 | Titandioxid (®Bayertitan RKB-2) Herst. Bayer AG, DE |
| 200 | Füllstoff (CaCO₃, ®Omyacarb 5 GU) Herst. Omya GmbH, DE |
| 200 | Füllstoff (CaCO₃, ®Omyacarb 2 GU) Herst. Omya GmbH, DE |
| 30 | Füllstoff (Glimmer, ®Plastorit 000) Herst. Luzenac Group, F |
| 50 | Füllstoff (Kaolin, ®China Clay Grade B) Herst. ECC International, GB |
| 1 | Natronlauge (10 %ig) |
| 120 | Acrylat-Dispersion (®Mowilith LDM 7712) Herst. Clariant GmbH, DE |
| 8 | Filmbildner, Butyldiglykolacetat |
| 1000 | |

- Probe A:: Verdicker Cellulosederivat des Beispiels 2C
- Probe B:: Verdicker Cellulosederivat des Beispiels 2D
- Probe C:: Verdicker Cellulosederivat des Beispiels 2E

Zum Vergleich mit den Cellulosederivaten der vorliegenden Erfindung werden folgende Verdicker gemäß dem Stand der Technik eingesetzt. Alle Viskositätswerte (mPa·s) der Verdicker werden in 2 %iger wäßriger Lösung bei 20 °C gemäß DIN 53 015 im Höppler-Kugelfallviskosimeter ermittelt.
- Probe D:: Verdicker Hydroxyethylcellulose, Viskosität 30000 mPa·s/2%ig
- Probe E:: Verdicker Methylhydroxyethylcellulose, Viskosität 30000 mPa·s/2%ig
- Probe F:: Verdicker Hydroxyethylcellulose mit langkettigem Alkylrest, Viskosität 6000 mPas·/2%ig

Zur Beurteilung der Waschbeständigkeit der gefertigten Farben werden mit einem Filmziehgerät Farbfilme mit einer Trockenschichtdicke von 100 µm aufgezogen. Nach Konditionierung von 28 Tagen bei 23 °C/50 % relativer Luftfeuchtigkeit wird die Waschbeständigkeit nach DIN 53778, Teil 2, geprüft.

| Probe | Anzahl Scherzyklen |
|---|---|
| A | 974 |
| B | 1270 |
| C | 1347 |
| D | 1347 |
| E | 1047 |
| F | 1047 |

Die erfindungsgemäßen Cellulosederivate führen zu einer geringeren Nachverdickung der Farben bei Lagerung und besitzen eine deutlich geringere Strukturviskosität als mit langkettigen Alkylgruppen hydrophob modifizierte Celluloseether. Gegenüber den Celluloseethern ohne hydrophobe Modifizierung wird mit den erfindungsgemäßen Cellulosederivaten ein deutlich reduziertes Spritzverhalten der Dispersionsfarbe erzielt. Hinsichtlich Glanz und Verlauf sind Vorteile erkennbar. Die gute Waschbeständigkeit der gefertigten Dispersionsfarben bleibt trotz Einführung wasserlöslicher Sulfoethylgruppen erhalten. Zum Erreichen der gewünschten Farbenkonsistenz besteht gegenüber Kombinationen herkömmlicher Celluloseether mit synthetischen Polyurethanverdickern die Möglichkeit Farben mit geringeren Verdickerkonzentrationen herzustellen.

## Patentansprüche

1. Wasserlösliche, ionische Celluloseether aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2, 31 substituiert sind und 0,01 bis 0,1 Sulfoalkylgruppen pro Anhydroglucoseeinheit tragen.

2. Celluloseether gemäß Anspruch 1, **dadurch gekennzeichnet, daß** die durchschnittliche Anzahl an Alkylgruppen pro Anhydroglucoseeinheit 0,001 bis 0,2 beträgt.

3. Celluloseether gemäß Anspruch 1 oder 2 der allgemeinen Formel
[C₆H₇O₂(OR¹)(OR²)(OR³)]ₘ
wobei
C₆H₇O₂ eine Anhydroglucoseeinheit,
m 50 - 3000
und R¹, R², R³ unabhängig voneinander eine Polyalkylenoxidkette der allgemeinen Formel 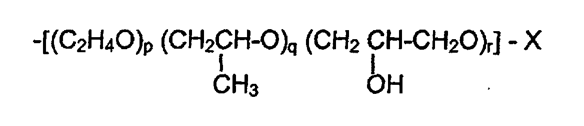
mit X = H, CₙH₂ₙ₊₁, CH₂-CH₂-SO₃Y, CH₂-CHOH-CH₂SO₃Y,
wobei n = 4 - 20
und Y = H, Na, K
darstellt, worin
p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5 ist und wobei die Reihenfolge der Oxyalkyleinheiten in der Polyalkylenoxidkette beliebig ist und die durchschnittliche Anzahl der hydrophob modifizierten Gruppen pro Anhydroglucoseeinheit (DS HM) 0,001 bis 0,2 beträgt und die durchschnittliche Anzahl der Sulfoalkylgruppen pro Anhydroglucoseeinheit 0,01 bis 0,1 beträgt.

4. Celluloseether gemäß mindestens einem der vorhergehenden Ansprüche, **dadurch gekennzeichnet, daß** die durchschnittliche Anzahl der hydrophob modifizierten Gruppen pro Anhydroglucoseeinheit (DS HM) 0,01 bis 0,04 beträgt.

5. Celluloseether gemäß mindestens einem der vorhergehenden Ansprüche, **dadurch gekennzeichnet, daß** die durchschnittliche Anzahl der Sulfoalkylgruppen pro Anhydroglucoseeinheit 0,01 bis 0,09 beträgt.

6. Celluloseether gemäß mindestens einem der vorhergehenden Ansprüche, **dadurch gekennzeichnet, daß** die Sulfoalkylgruppen Sulfoethylgruppen sind.

7. Verfahren zur Herstellung der Celluloseether gemäß mindestens einem der Ansprüche 1 bis 6 durch Veretherung von Cellulose mit einem Veretherungsmittel aus der Gruppe der Alkylenoxide und Veretherung mit einem Alkylhalogenid oder einem Alkylglycidylether und einem Sulfonat unter Basenkatalyse.

8. Verfahren zur Herstellung der Celluloseether gemäß mindestens einem der Ansprüche 1 bis 6 durch Veretherung von Celluloseethem aus der Gruppe der Hydroxyalkylcellulosen mit einem Alkylhalogenid oder einem Alkylglycidylether und einem Sulfonat unter Basenkatalyse.

9. Verwendung von wasserlöslichen, ionischen Celluloseethem aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2, 31 substituiert sind und 0,01 bis 0,4 Sulfoalkylgruppen pro Anhydroglucoseeinheit tragen, in Dispersionsfarben.

10. Dispersionsfarbe enthaltend wasserlösliche, ionische Celluloseether aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2, 31 substituiert sind und 0,01 bis 0,4 Sulfoalkylgruppen pro Anhydroglucoseeinheit tragen.

## Claims

1. A water-soluble ionic cellulose ether from the group of hydroxyalkylcelluloses which is substituted by on average from 0.001 to 1.0 alkyl group per anhydroglucose unit and by a number of hydroxyalkyl groups per anhydroglucose unit (MS) of at least 2.31, and which carries from 0.01 to 0.1 sulfoalkyl group per anhydroglucose unit.

2. A cellulose ether as claimed in claim 1, wherein the average number of alkyl groups per anhydroglucose unit is from 0.001 to 0.2.

3. A cellulose ether as claimed in claim 1 or 2, of the formula
[C₆H₇O₂(OR¹) (OR²)(OR³)]ₘ
where C₆H₇O₂ is an anhydroglucose unit,
m is 50 - 3000,
and R¹, R², R³ independently of one another are each a polyalkylene oxide chain of the formula 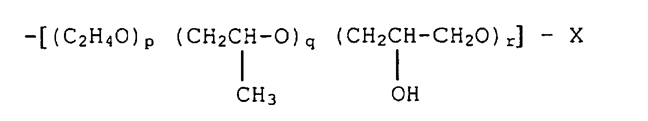 where X = H, CₙH₂ₙ₊₁, CH₂-CH₂-SO₃Y or CH₂-CHOH-CH₂SO₃Y, n = 4 - 20
and Y = H, Na or K,
and in which
p, q, and r independently of one another in R¹, R² and R³ can each independently assume values from 0 to 4, the sum of all (p+q+r) added over R¹, R² and R³ per anhydroglucose unit is on average greater than 1.3 and less than 4.5, the sequence of the oxyalkyl units in the polyalkylene oxide chain is arbitrary, and the average number of hydrophobically modified groups per anhydroglucose unit (DS HM) is from 0.001 to 0.2, and the average number of sulfoalkyl groups per anhydroglucose unit is from 0.01 to 0.1.

4. A cellulose ether as claimed in at least one of the preceding claims, wherein the average number of hydrophobically modified groups per anhydroglucose unit (DS HM) is from 0.01 to 0.04.

5. A cellulose ether as claimed in at least one of the preceding claims, wherein the average number of sulfoalkyl groups per anhydroglucose unit is from 0.01 to 0.09.

6. A cellulose ether as claimed in at least one of the preceding claims, wherein the sulfoalkyl groups are sulfoethyl groups.

7. A process for preparing a cellulose ether as claimed in at least one of claims 1 to 6 by etherifying cellulose with an etherifying agent from the group of alkylene oxides and etherifying with an alkyl halide or an alkyl glycidyl ether and a sulfonate, with base catalysis.

8. A process for preparing a cellulose ether as claimed in at least one of claims 1 to 6 by etherifying cellulose ethers from the group of hydroxyalkylcelluloses with an alkyl halide or an alkyl glycidyl ether and a sulfonate, with base catalysis.

9. The use of a water soluble ionic cellulose ether from the group of hydroxyalkylcelluloses which is substituted by on average from 0.001 to 1.0 alkyl group per anhydroglucose unit and by a number of hydroxyalkyl groups per anhydroglucose unit (MS) of at least 2.31, and which carries from 0.01 to 0.4 sulfoalkyl group per anhydroglucose unit in an emulsion paint.

10. An emulsion paint comprising one or more water-soluble ionic cellulose ethers from the group of hydroxyalkylcelluloses which are substituted by on average from 0.001 to 1.0 alkyl group per anhydroglucose unit and by a number of hydroxyalkyl groups per anhydroglucose unit (MS) of at least 2.31, and which carry from 0.01 to 0.4 sulfoalkyl group per anhydroglucose unit.

## Revendications

1. Ethers de cellulose ioniques, hydrosolubles choisi parmi les hydroxyalkylcelluloses, qui sont substituées avec en moyenne de 0,001 à 1,0 groupe alkyle par motif anhydroglucose et avec une quantité de groupes hydroxyalkyle d'au moins 2,31 par motif anhydroglucose (M5) et portent de 0,01 à 0,1 groupe sulfoalkyle par motif anhydroglucose.

2. Ethers de cellulose selon la revendication 1, caractérisés en que la quantité moyenne de groupes alkyle par motif anhydroglucose est de 0,001 à 0,2.

3. Ethers de cellulose selon la revendication 1 ou 2 de formule générale
[C₆H₇O₂(OR¹) (OR²) (OR³)]ₘ
dans laquelle C₆H₇O₂ représente un motif anhydroglucose,
m représente 50-3000
et R¹, R², R³ représentent, indépendamment les uns des autres, une chaîne polyoxyde d'alkylène de formule générale 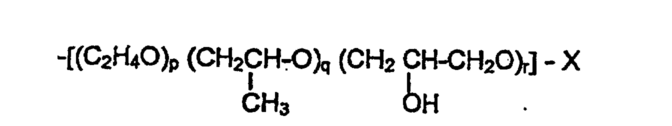 avec X = H, CₙH₂ₙ₊₁, CH₂-CH₂-SO₃Y, CH₂-CHOH-CH₂SO₃Y,
dans laquelle n = 4-20
et Y = H, Na, K,
dans laquelle
p, q et r, indépendamment les uns des autres dans R¹, R² et R³ peuvent prendre respectivement indépendamment des valeurs de 0 à 4, la somme de tous les (p+q+r) ajoutée sur R¹, R² et R³ est en moyenne par motif anhydroglucose supérieure à 1,3 et inférieure à 4,5 et la suite des motifs oxyalkyle pouvant être quelconque dans la chaîne polyoxyde d'alkylène et la quantité moyenne de groupes modifiés pour les rendre hydrophobes par motif anhydroglycose (DS HM) est de 0,001 à 0,2 et la quantité moyenne des groupes sulfoalkyle est de 0,01 à 0,1 par motif anhydroglucose.

4. Ethers de cellulose selon au moins une des revendications précédentes, **caractérisés en ce que** la quantité moyenne des groupes modifiés pour les rendre hydrophobes est de 0,01 à 0,04 par motif anhydroglucose (DS HM).

5. Ethers de cellulose selon au moins une des revendications précédentes, **caractérisés en ce que** la quantité moyenne des groupes sulfoalkyle est de 0,01 à 0,09 par motif anhydroglucose.

6. Ethers de cellulose selon au moins une des revendications précédentes, caractérisés les groupes sulfoalkyle sont des groupes sulfoéthyle.

7. Procédé pour la préparation des éthers de cellulose selon au moins une des revendications 1 à 6 par éthérification de cellulose avec un agent d'éthérification choisi parmi les oxydes d'alkylène et éthérification avec un halogénure d'alkyle ou un alkylglycidyléther et un sulfonate sous catalyse basique.

8. Procédé pour la préparation des éthers de cellulose selon au moins une des revendications 1 à 6 par éthérification d'éthers de cellulose choisis parmi les hydroxyalkylcelluloses avec un halogénure d'alkyle ou un alkylglycidyléther et un sulfonate sous catalyse basique.

9. Utilisation dans des colorants de dispersion d'éthers de cellulose ioniques, hydrosolubles choisis parmi les hydroxyalkylcelluloses, qui sont substitués par de 0,001 à 1,0 groupe alkyle en moyenne par motif anhydroglucose et une quantité de groupes hydroxyalkyle d'au moins 2,31 par motif anhydroglucose (M5) et contiennent de 0,01 à 0,4 groupe sulfoalkyle par motif anhydroglucose.

10. Colorants de dispersion contenant des éthers de cellulose ioniques, hydrosolubles, choisis parmi les hydroxyalkylcelluloses, qui sont substituées par de 0,001 à 1,0 groupe alkyle en moyenne par motif anhydroglucose et une quantité de groupes hydroxyalkyle d'au moins 2,31 par motif anhydroglucose (M5) et portent de 0,01 à 0,4 groupe sulfoalkyle par motif anhydroglucose.
